**Europäisches Patentamt**

**European Patent Office**

**Office européen des brevets**

(19)

(11) Veröffentlichungsnummer : **0 428 864 B1**

## (12) EUROPÄISCHE PATENTSCHRIFT

(45) Veröffentlichungstag der Patentschrift :
**19.04.95 Patentblatt 95/16**

(51) Int. Cl.$^6$ : **H04N 3/15,** H04N 5/33

(21) Anmeldenummer : **90119667.5**

(22) Anmeldetag : **13.10.90**

(54) IR-CCD-Detektoranordnung.

(30) Priorität : **16.11.89 DE 3938128**

(43) Veröffentlichungstag der Anmeldung :
**29.05.91 Patentblatt 91/22**

(45) Bekanntmachung des Hinweises auf die
Patenterteilung :
**19.04.95 Patentblatt 95/16**

(84) Benannte Vertragsstaaten :
**DE ES FR GB IT**

(56) Entgegenhaltungen :
**EP-A- 0 082 406**

(73) Patentinhaber : **Licentia
Patent-Verwaltungs-GmbH
Theodor-Stern-Kai 1
D-60596 Frankfurt (DE)**

(72) Erfinder : **Köhler, Ludwig, Dipl.-Ing.
Rockenauer Pfad 4
W-6909 Walldorf (DE)**

(74) Vertreter : **Vogl, Leo, Dipl.-Ing.
Licentia
Patent-Verwaltungs-G.m.b.H.
Theodor-Stern-Kai 1
D-60596 Frankfurt (DE)**

**Beschreibung**

Die Erfindung bezieht sich auf eine IR-CCD-Detektoranordnung gemäß dem Oberbegriff des Anspruchs 1 sowie auf ein Verfahren zum Betreiben derselben.

Eine solche IR-CCD-Detektoranordnung ist im wesentlichen der Druckschrift "THE FRENCH INFRARED START UP" der Firma SOFRADIR (= SOCIETE FRANCAISE DE DETECTEURS INFRAROUGE) des Jahres 1988 oder 1989 - exaktes Drucklegungsdatum fehlt - zu entnehmen. Diese Anordnung besitzt m Detektorelemente in Spaltenrichtung und n Elemente in Zeilenrichtung, wobei $m \gg n$ und $n > 1$ ist. Mit ihnen wird die interessierende Szene in Zeilenrichtung abgetastet, wobei die Zeilenrichtung zwar üblicherweise waagrecht liegt, aber auch jede andere Richtung einnehmen kann. Der Detektoranordnung ist auf der Bildebene eine Integrations- und eine TDI-CCD-Struktur (= Time Delay and Integration - Charge Coupled Device) zugeordnet, mit deren Hilfe Ladungssignale integriert und durch Ladungsverschiebung ausgelesen werden können. Durch phasenrichtiges Zusammenspiel des Abtastvorgangs, der Ladungsverschiebung und der Ladungssummation - kurz TDI-Betrieb genannt - kann das Signal/Rausch-Verhältnis um den Faktor $\sqrt{n}$ verbessert werden.

Eine weitere, ähnliche Anordnung ist aus der EP-A-0082 406 bekannt.

Der Erfindung liegt nun die Aufgabe zugrunde, die gattungsgemäße Anordnung so zu verbessern, daß an dem Ausgang bzw. den Ausgängen der IR-CCD-Detektoranordnung trotz einer p-fachen TDI-CCD-Struktur zwischen je zwei benachbarten Detektorelementen einer Zeile eine p mal niedrigere Auslesefrequenz möglich ist, als es ohne diese besondere Betriebsweise möglich wäre, bei Bedarf aber auch die bisher übliche, der p-fachen Struktur entsprechende Betriebsweise eingestellt werden kann, so daß mit ein und derselben internen Struktur der IR-CCD-Detektoranordnung beide Betriebsarten durchgeführt werden können.

Ausgehend von der gattungsgemäßen Anordnung wird die Aufgabe durch die Merkmale f) und g) des Anspruchs 1 gelöst.

Im folgenden wird an Hand der Figuren 1 bis 4 ein Ausführungsbeispiel der erfindungsgemäßen Betriebsweise Index 2 erläutert, wobei aus Gründen der Anschaulichkeit zunächst die zum Stand der Technik zählende Betriebsart Index 1 beschrieben wird. Es zeigen

Fig. 1a    eine IR-CCD-Detektoranordnung, gültig für eine beliebige Zeile,
Fig. 1b    die prinzipielle Darstellung einer Bildvorlage kontinuierlichen Bildinhalts,
Fig. 2     die prinzipielle Darstellung eines über die Detektoranorndung fortschreitenden Punktziels,
Fig. 3a    das Zeitdiagramm der Ladungsübergabe $ü_1(t)$ der Betriebsart 1,
Fig. 3b    das Zeitdiagramm der Ladungsverschiebung $v_1(t)$ von CCD-Doppelspeicher zu Doppelspeicher,
Fig. 4a    das Zeitdiagramm der erfindungsgemäßen Ladungsübergabe $v_2(t)$ der Betriebsart 2,
Fig. 4b    das Zeitdiagramm der Ladungsverschiebung $v_2(t)$ von CCD-Doppelspeicher zu Doppelspeicher.

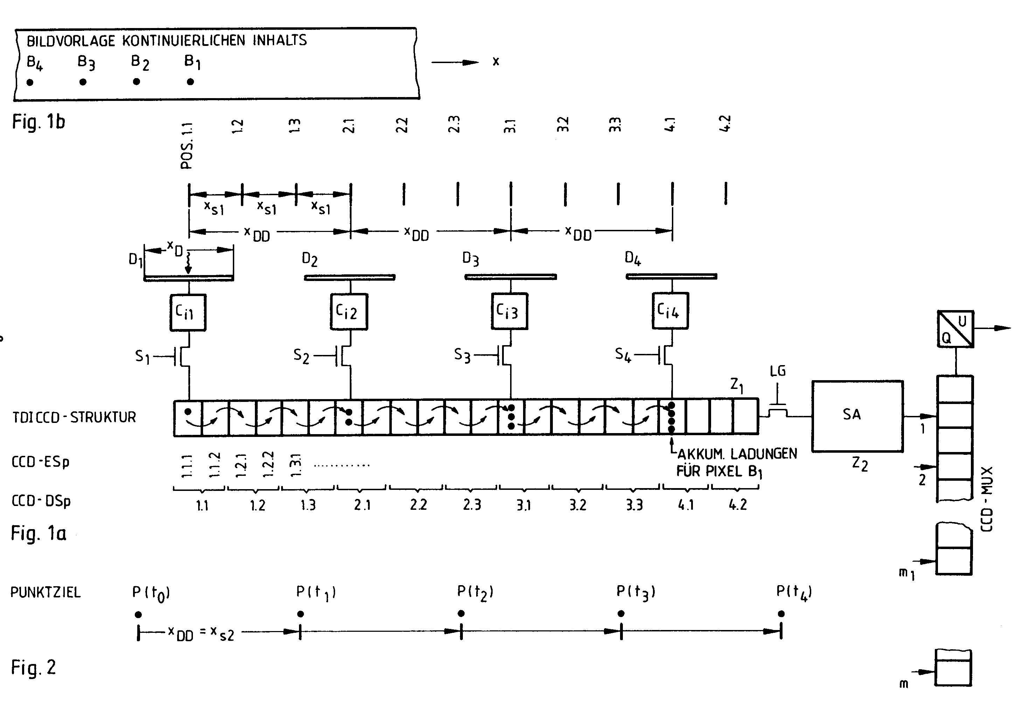

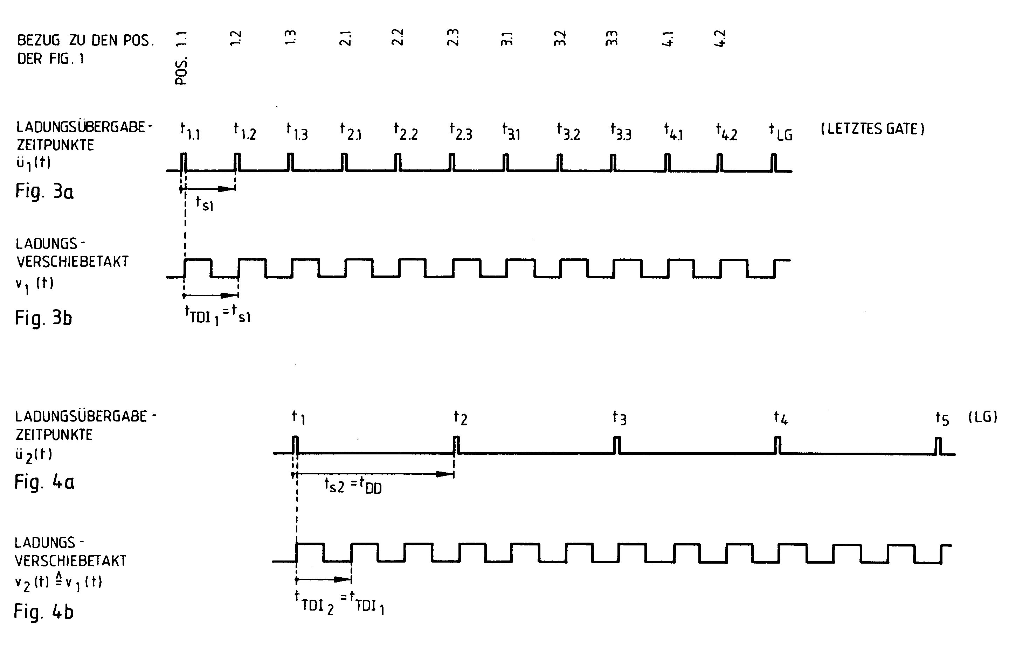

In Fig. 1 ist die prinzipielle Anordnung von vier Detektorelementen $D_1$ bis $D_4$ und der zugehörigen Speicher- und Ladungsverschiebestrukturen einer beliebigen Zeile gezeichnet. Bei anderen nicht näher dargestellten Ausführungsbeispielen können es mehr oder auch weniger Detektorelemente und Strukturen sein, ohne daß dadurch der Rahmen der Erfindung verlassen würde. Besagte Detektorelemente sind mit den vier Integrations-Speicher-Strukturen $C_{i1}$ bis $C_{i4}$ versehen, an die in Durchtrittsrichtung des Signals die vier Eingänge der Ladungs-Übergabe-Schalter $S_1$ bis $S_4$ angeschlossen sind. Die Ausgänge dieser Schalter führen zu der (in vereinfachter Weise gezeichneten) sogenannten Time Delay and Integration-Charge Coupled Device - Struktur TDI-CCD, mit deren Hilfe Ladungen summiert und verschoben werden können. Das letzte Gate dieser Struktur ist mit den Bezugsbuchstaben LG gekennzeichnet, Diese Strukturen bestehen zunächst aus sog. CCD-Doppelspeicherplätzen CCD-D Sp 1.1 bis 4.2, auch CCD-Zellen genannt, die durch entsprechende Potentialeinstellungen mit Hilfe hier nicht gezeichneter Gates als sog. Potentialtöpfe zustandekommen und von denen je p Stück je zwei benachbarten Detektorelementen und deren Integrationsspeichern zugeordnet sind. Jeder Doppelspeicherplatz ist dann nochmals in zwei Einzelspeicherplätze CCD-ESp 1.1.1, 1.1.2, 1.2.1, 1.2.2 etc. unterteilt.

Über das letzte Gate LG gelangt das Signal auf die Signalanpassungs-Struktur SA, die ebenso wie die CCD-Zelle 4.2 noch als Zwischenspeicher $Z_1$ bzw. $Z_2$ ausgebildet sein kann. Der Ausgang der Struktur SA führt sein Zeilensignal an den entsprechenden Eingang eines in CCD-Technik erstellten Multiplexers CCD-Mux, der $m_1$ parallele Eingänge und einen seriellen Ausgang besitzt. Von dem CCD-Mux gelangt das Signal an den Ladungs-/Spannungskonverter Q/U. Insgesamt sind $m/m_1$ solche Multiplexer vorhanden, die entsprechend viele Zeilengruppen bedienen ($m_1 \leqq m$).

Die als bekannt vorausgesetzte Betriebsweise Index 1 dient zur Erzeugung eines Bildes einer Szene. Sie wird hier nochmals erläutert, um den Unterschied zur Betriebsweise Index 2 herausstellen zu können, die nur die Detektion von Punktzielen, d.h. nur eine Ja/Nein-Aussage, zur Aufgabe hat.

Die Größe $x_D$ eines Detektorelementes in der Scanrichtung x bestimmt nun die Größe eines Bildelementes und damit die erzielbare Auflösung, die mit dieser abtastenden Bildaufnahme in der Betriebsweise 1 zu errei-

2

chen ist. Diese Auflösung kann aber nur dann voll ausgenutzt werden, wenn bei der Abtastung in Scanrichtung das Shannon'sche Abtasttheorem(Sampling-rate $s_x = x_D/x_s = 2$ Samples pro Bildelement) wenigstens angenähert erfüllt wird. Ein Beispiel, das dem heutigen Stand der Technik entspricht und bei dem nur 1,75 Samples pro Bildelement aufgenommen werden, ist in Fig. 1 gezeigt. Ein Ausschnitt der Bildvorlage ist mit $B_1$, $B_2$, $B_3$, $B_4$ gekennzeichnet. Dabei stellt beispielsweise der Punkt $B_1$ den Mittelpunkt des Bildelementes $B_1$ dar. Der Abstand zwischen zwei benachbarten Punkten, z.B. $B_1$ und $B_2$, beträgt $x_s = x_D /1.75$, so daß sich die so definierten Pixel der Größe $x_D$ überlappen. Die Bildvorlage bewegt sich von links nach rechts und gibt Strahlung in Richtung der Detektoren $D_1$ bis $D_4$ ab, die in den Integrationsspeichern $C_{i1}$ bis $C_{i4}$ entsprechende Ladungen erzeugen. Diese Ladungen werden immer dann mit Hilfe der Ladungsübergabe-Schalter $S_1$ bis $S_4$ in die entsprechenden TDI CCD-Zellen übergeben, wenn sich beispielsweise $B_1$ in den Positionen Pos. 1.1, Pos. 1.2 bis Pos. 4.1 etc. befindet. Die Ladungen müssen in der TDI CCD-Struktur synchron mit dem Fortschreiten der Bildvorlage verschoben werden, so daß beispielsweise die im Zeitpunkt $t_{1.1}$ übergebene Ladung Q ($B_1$; $D_1$) im Zeitpunkt $t_{2.1}$ zu der Ladung Q ($B_1$; $D_2$) addiert werden kann. Entsprechend fortschreitend ergibt sich dann am Ausgang der TDI CCD-Struktur in Zelle 4.1/4.2 ein gesamtes Ladungssignal

$$Q_{B1} = Q (B_1; D_1) + Q (B_1; D_2) + Q (B_1; D_3) + Q (B_1; D_4)$$

Entsprechende Ladungssignale $Q_{B2}$, $Q_{B3}$, $Q_{B4}$ der Pixels $B_2$, $B_3$, $B_4$ ergeben sich in zeitlichen Abständen $t_{s1}$, die über die Scangeschwindigkeit den Abständen $x_{s1}$ zugeordnet sind. Da der Auslese-Multiplexer CCD-Mux $m_1$ parallel anliegende Zeilensignale in der Zeit $t_{s1}$ auszulesen hat, ergibt sich eine Auslesefrequenz

$$f_{A1} = m_1/t_{s1}$$

Die beschriebene Aufnahme von Samples im Abstand $x_s = x_D / s_x$ (mit $s_x$ gleich 2 oder nur wenig kleiner) und die in diskreten Schritten entsprechend synchron verlaufende Ladungsverschiebung ist nur dann möglich, wenn die TDI CCD-Struktur zwischen je zwei Detektoren in p CCD-Doppelspeicherplätze unterteilt ist, wobei der Zusammenhang gilt:

$$p = x_{DD}/x_{s1} = s_{x1}x_{DD}/x_D$$

wenn $x_{DD}$ den Detektormittenabstand bedeutet. Das Beispiel in Fig. 1 gilt für p = 3. Der Ladungsverschiebetakt $v_1$ (t) besitzt die Frequenz

$$f_{TDI_1} = 1/t_{s1} = p/t_{DD},$$

wobei $t_{DD}$ die dem Detektormittenabstand $x_{DD}$ zugeordnete Zeit bezeichnet.

Kennzeichen der Betriebsweise 1 ist es, daß der Ladungsübergabetakt $ü_1$(t) die gleiche Frequenz wie der Ladungsverschiebetakt $v_1$(t) haben muß:

$$f_{ü1} = f_{TDI_1} = 1/t_{s1} = p/t_{DD}$$

und daß - dadurch bedingt - die oben erwähnte Auslesefrequenz einen relativ hohen Wert

$$f_{A1} = m_1 f_{TDI_1} = m_1 p/t_{DD}$$

besitzt.

In Fig. 3 sind die beiden Verläufe $ü_1$(t) und $v_1$(t) im Prinzip dargestellt. Ist bei einem Detektor die Zahl $m_1$ und mit ihr die Zahl der verwendeten CCD-Multiplexer festgelegt, und sind der Auslesefrequenz $f_A$ nach oben hin aus technologischen Gründen Grenzen gesetzt, so darf $t_{s1}$ einen bestimmten Mindestwert und damit die Scangeschwindigkeit $v_{sc} = x_s /t_s$ einen bestimmten Maximalwert nicht überschreiten.

Manche Anwendungen, wie beispielsweise die Detektion von Punktzielen innerhalb eines großen Bildwinkels, erfordern eine sehr hohe Scangeschwindigkeit, um die erforderliche Aufgabe in der vorgeschriebenen Zeit zu erfüllen. Hierbei kann es vorkommen, daß obige Auslesefrequenz einen zu hohen Wert einnimmt, wenn nämlich der gesamte Aufnahme- und Auslesevorgang in der beschriebenen und als bekannt vorausgesetzten Betriebsweise "Index 1" erfolgt. Wenn es sich bei der Detektionsaufgabe nicht darum handelt, eine aliasingfreie Bilddarstellung zu erzeugen (Aliasing oder Moiré-Effekte ergeben sich bei $s_x$ deutlich kleiner 2), sondern nur darum, eine Ja/Nein-Aussage zum Vorhandensein oder Nichtvorhandensein eines Punktzieles zu treffen, genügt es, beim Fortschreiten des Punktzielbildes P über die Detektoranordnung nur in Abständen $x_{s2} = x_{DD}$ bzw.

Zeitabständen $t_{s2} = t_{DD}$ Ladung von den Integrationsspeichern $C_i$ in die Eingangsspeicher der TDI-CCD-Struktur zu übergeben.

In Fig. 2, die räumlich gesehen der Fig. 1 zuzuordnen ist, ist dieser Fall des von links nach rechts fortschreitenden Punktzieles P dargestellt. Die Bezeichnungen P ($t_1$), P ($t_2$), P ($t_3$), P ($t_4$) zeigen ein Beispiel der Punktzielpositionen bei den verschiedenen Ladungsübergabezeitpunkten. Die so zustandekommenden Samplingabstände entsprechen den Detektormittenabständen:

$$x_{s2} = x_{DD}$$

Entsprechendes gilt für die zeitlichen Samplingabstände:

$$t_{s2} = t_{DD}$$

Die eigentliche Erfindung wird nun darin gesehen, die Ladungsübergabe $ü_2$(t) zwar in diesen Zeitabständen $t_{DD}$ durchzuführen, aber dennoch die Frequenz des Ladungsverschiebetaktes $v_2(t)$ beizubehalten, wie sie vorstehend für Betriebsweise 1 beschrieben wurde. In dieser erfindungsgemäßen Betriebsweise mit dem Index 2 gilt demnach für die Ladungsübergabefrequenz

$$f_{\ddot{u}2} = 1/t_{DD}$$

und für die Ladungsverschiebetaktfrequenz

$$f_{TDI_2} = f_{TDI_1} = f_{TDI} = p/t_{DD} = f_{TDI}$$

Die prinzipiellen Zeitdiagramme $\ddot{u}_2(t)$ und $v_2(t)$ sind in Fig. 4 dargestellt.

Weiterer Bestandteil der Erfindung ist es, die im Vergleich zum $f_{TDI}$-Takt am Ausgang der TDI-CCD-Struktur anfallenden Ladungspakete zwischenzuspeichern, so daß sie nicht im Takt $f_{TDI} = p/t_{DD}$, wie dies in der oben beschriebenen Ausleseart mit dem Index 1 der Fall war, an die entsprechenden Paralleleingänge des CCD-Multiplexers, sondern nur im Takt

$$f_{\ddot{u}2} = 1/t_{s2} = 1/t_{DD}$$

weitergegeben werden. Die Auslesefrequenz wird damit nur

$$f_{A2} = m_1 f_{\ddot{u}2} = m_1/t_{DD}$$

und nicht etwa wie vorher

$$f_{A1} = m_1 p/t_{DD}$$

Auf diese Weise wird es in vielen Fällen ermöglicht, ein und denselben Detektor abwechselnd in verschiedenen Betriebsarten für verschiedene Aufgaben (aliasingfreie Bilddarstellung oder reine Ja/Nein-Aussage für Detektionszwecke) zu verwenden, indem lediglich die Ansteuerung geändert wird.

Die oben erwähnte Zwischenspeicherung der Ladungspakete kann in der letzten CCD-Zelle 4.2 der TDI-CCD-Struktur stattfinden, indem das anschließende Gate LG im Takt $f_{\ddot{u}2} = 1/t_{DD}$ gesteuert wird. In Fig. 1 wurde diese eine Zwischenspeichermöglichkeit mit $Z_1$ bezeichnet. Eine weitere Möglichkeit $Z_2$ besteht darin, die Zwischenspeicherung in der Struktur SA zu vollziehen, die - wie oben erwähnt - zwischen dem Ausgang der TDI-CCD-Struktur und dem entsprechenden Paralleleingang des CCD-Multiplexers zur Signalanpassung vorhanden ist.

**Patentansprüche**

1.  IR-CCD-Detektoranordnung (IR = Infrarot, CCD = Charge Coupled Device), mit der Bildelemente einer IR-Szene in Zeilenrichtung abgetastet, Ladungssignale integriert, zur Verbesserung des Signal-Rauschverhältnisses phasenrichtig addiert und im Multiplexverfahren ausgelesen werden, und die sich zusammensetzt aus:

    a) m Detektorelementen in Spaltenrichtung und n Detektorelementen ($D_1$, $D_2$, $D_3$, $D_4$) in Zeilenrichtung mit m >> n und n > 1,

    b) m x n jeweils mit einem der Detektorelemente ($D_1$, $D_2$, $D_3$, $D_4$) verbundene Integrationsspeicherstrukturen ($C_{I1}$ bzw. $C_{I2}$ bzw. $C_{I3}$ bzw. $C_{I4}$) zur Speicherung der von den Detektorelementen ($D_1$ bzw. $D_2$, $D_3$ bzw. $D_4$) gelieferten Ladungssignale,

    c) m TDI-CCD-Strukturen (TDI = Time Delay and Integration) zur Ladungsverschiebung, von denen jede

    n Signaleingänge und einen Signalausgang aufweist,

    als Reihe hintereinandergeschalteter CCD-Doppelspeicherzellen (1.1, 1.2, 1.3, 2.1, 2.2, 2.3, 3.1, 3.2, 3.3, 4.1, 4.2) ausgebildet ist, wobei

    n CCD-Doppelspeicherzellen (1.1, 2.1, 3.1, 4.1) der Reihe mit jeweils einem der Signaleingänge verbunden sind,

    jeweils zwischen zwei mit Signaleingängen verbundenen CCD-Doppelspeicherzellen (1.1, 2.1, 3.1, 4.1) der Reihe p-1 weitere nicht mit den Signaleingängen verbundene CCD-Doppelspeicherzellen (1.2, 1.3 bzw. 2.2, 2.3 bzw. 3.2, 3.3) angeordnet sind, wobei p > 1,

    die letzte CCD-Doppelspeicherzelle (4.2) der Reihe den Signalausgang der TDI-CCD-Struktur bildet,

    d) m x n Ladungsübergabeschaltern ($S_1$, $S_2$, $S_3$, $S_4$), über die jeweils ein Signaleingang einer TDI-CCD-Struktur derart mit einer Integrationsspeicherstruktur ($C_{I1}$ bzw. $C_{I2}$ bzw. $C_{I3}$ bzw. $C_{I4}$) verbunden ist, daß die Detektorelemente ($D_1$, $D_2$, $D_3$, $D_4$) eine Zeile der Reihe nach jeweils den Signaleingängen einer TDI-CCD-Struktur zugeordnet sind, und

    e) mindestens einer CCD-Multiplexerstruktur (CCD-MUX) zur Signalauslesung mit ingesamt m dem Signalausgang jeweils einer TDI-CCD-Struktur zugeordneten CCD-Multiplexereingängen (1, 2, $m_1$, m), dadurch gekennzeichnet, daß

    f) die IR-CCD-Detektoranordnung m Signalanpassungsstrukturen (SA) zur Anpassung der an den Signalausgängen der TDI-CCD-Strukturen anliegenden Signalpegel an die CCD-Multiplexereingänge (1, 2, $m_1$, m) aufweist, wobei die Signalausgänge der TDI-CCD-Strukturen jeweils über eine Signalanpassungsstruktur (SA) mit einem der CCD-Multiplexereingänge (1 bzw. 2 bzw. $m_1$ bzw. m) verbunden sind,

g) die IR-CCD-Detektoranordnung in einer Betriebsart betreibbar ist, bei der

die Ladungsübergabetaktfrequenz ($f_{Ü2}$), mit der die Ladungssignale aus dem Integrationsspeicherstrukturen ($C_{I1}$, $C_{I2}$, $C_{I3}$, $C_{I4}$) in die TDI-CCD-Strukturen übergeben werden, gleich dem Reziprokwert des Zeitintervalls $t_{DD}$ ist, in welchem während des Abtastvorgangs ein Bildpunkt (B1, B2, B3, B4) von der Mitte eines Detektorelements ($D_1$, $D_2$, $D_3$) zur Mitte des benachbarten Detektorelements ($D_2$ bzw. $D_3$ bzw. $D_4$) bewegt wird,

die Ladungsverschiebetaktfrequenz ($f_{TDI2}$), mit der die Ladungssignale innerhalb der TDI-CCD-Strukturen von einer CCD-Doppelspeicherzelle zur benachbarten CCD-Doppelspeicherzelle verschoben werden, p mal höher als die Ladungsübergabefrequenz ($f_{Ü2}$) ist, und

die Signalauslesung aus den TDI-Strukturen im Takt der Ladungsübergabetaktfrequenz ($f_{Ü2}$) erfolgt.

2. IR-CCD-Detektoranordnung nach Anspruch 1, dadurch gekennzeichnet, daß die jeweils letzten CCD-Doppelspeicherzellen (4.2) der TDI-CCD-Strukturen zur Zwischenspeicherung der von den TDI-CCD-Strukturen bereitgestellten Ladungssignale vorgesehen sind.

3. IR-CCD-Detektoranordnung nach Anspruch 1 oder 2, dadurch gekennzeichnet, daß die Signalausgänge der TDI-CCD-Strukturen über jeweils ein im Takt der Ladungsübergabetaktfrequenz ($f_{Ü2}$) ansteuerbares Gate (LG) mit den entsprechenden Signalanpassungsstrukturen (SA) verbunden sind.

4. IR-CCD-Detektoranordnung nach einem der Ansprüche 1 bis 3, dadurch gekennzeichnet, daß die Signalanpassungsstrukturen (SA) zur Zwischenspeicherung der von den letzten CCD-Doppelspeicherzellen (4.2) der TDI-CCD-Strukturen bereitgestellten Ladungssignale vorgesehen sind.

## Claims

1. IR-CCD detector arrangement (IR = Infra Red, CCD = Charge Coupled Device) in which the picture elements of an IR scene are scanned in the row direction, charge signals are integrated, are added with the correct phase for improving the signal-to-noise ratio and are read-out using a multiplexing process and which comprises:

a) m detector elements in the column direction and n detector elements ($D_1$, $D_2$, $D_3$, $D_4$) in the row direction where m >> n and n > 1,

b) m x n integrating storage structures ($C_{I1}$ or $C_{I2}$ or $C_{I3}$ or $C_{I4}$) coupled to a respective one of the detector elements ($D_1$, $D_2$, $D_3$, $D_4$) for storing the charge signals delivered by the detector elements ($D_1$ or $D_2$, $D_3$ or $D_4$),

c) m TDI-CCD structures (TDI = Time Delay and Integration) for displacing the charge, of which, each one

has n signal inputs and one signal output,

is formed as a series of successively connected CCD dual storage cells (1.1, 1.2, 1.3, 2.1, 2.2, 2.3, 3.1, 3.2, 3.3, 4.1, 4.2) wherein

n CCD dual storage cells (1.1, 2.1, 3.1, 4.1,) of the series are respectively connected to one of the signal inputs,

p-1 further CCD dual storage cells (1.2, 1.3 or 2.2, 2.3 or 3.2, 3.3), which are not connected to the signal inputs, are arranged in each case between two CCD dual storage cells (1.1, 2.1, 3.1, 4.1,) of the series which are connected to the signal inputs, where p > 1,

the last CCD dual storage cell (4.2) of the series forms the signal output of the TDI-CCD structure,

d) m x n charge transfer switches (S1, S2, S3, S4), via which a respective signal input of a TDI-CCD structure is connected to an integrating storage structure ($C_{I1}$ or $C_{I2}$ or $C_{I3}$ or $C_{I4}$) in such a way that the detector elements (D1, D2, D3, D4) are associated, each row in turn, with respective signal inputs of a TDI-CCD structure and

e) at least one CCD multiplexer structure (CCD-MUX) for signal read-out having a total of m CCD multiplexer inputs (1, 2, $m_1$, m) associated with the signal output of a respective TDI-CCD structure, characterised in that,

f) the IR-CCD detector arrangement has m signal matching structures (SA) for matching the signal level present at the signal outputs of the TDI-CCD structures to the CCD multiplexer inputs (1, 2, $m_1$, m),

wherein the signal outputs of the TDI-CCD structures are connected via a respective signal matching structure (SA) to one of the CCD multiplexer inputs (1 or 2 or $m_1$ or m),

g) the IR-CCD detector arrangement can be operated in an operational mode in which

the charge transfer clock frequency ($f_{\ddot{u}2}$), with which the charge signals are transferred from the integrating storage structures ($C_{i1}$, $C_{i2}$, $C_{i3}$, $C_{i4}$) into the TDI-CCD structures, is equal to the reciprocal value of the time interval $t_{DD}$ in which a picture element ($B_1$, $B_2$, $B_3$, $B_4$) is moved from the centre of one detector element ($D_1$, $D_2$, $D_3$) to the centre of the adjacent detector element ($D_2$ or $D_3$ or $D_4$) during the scanning process,

the charge displacement clock frequency ($f_{TDI2}$), with which the charge signals are displaced within the TDI-CCD structures from one CCD dual storage cell to the adjacent CCD dual storage cell, is p times greater than the charge transfer clock frequency ($f_{\ddot{u}2}$) and

the signal read-out from the TDI-CCD structures occurs at the clock rate of the charge transfer clock frequency ($f_{\ddot{u}2}$).

2. IR-CCD detector arrangement in accordance with Claim 1, characterised in that, the respective last CCD dual storage cells (4.2) of the TDI-CCD structures are provided for buffer storing the charge signals that are made available by the TDI-CCD structures.

3. IR-CCD detector arrangement in accordance with Claim 1 or 2, characterised in that, the signal outputs of the TDI-CCD structures are connected to the corresponding signal matching structures (SA) via a respective gate (LG) which is controllable at the rate of the charge transfer clock frequency ($f_{\ddot{u}2}$).

4. IR-CCD detector arrangement in accordance with any of the Claims 1 to 3, characterised in that, the signal matching structures (SA) are provided for buffer storing the charge signals that are made available by the last CCD dual storage cells (4.2) of the TDI-CCD structures.

**Revendications**

1. Dispositif de détecteur CCD-IR (IR = infrarouge, CCD = dispositif à couplage de charge), avec lequel des éléments d'image d'une scène IR sont analysés dans le sens des lignes, des signaux de charge sont intégrés, sont additionnés en phase correcte en vue de l'amélioration du rapport signal/bruit et sont lus par multiplexage, et qui se compose de :

a) m éléments détecteurs dans la direction des colonnes et de n éléments détecteurs ($D_1$, $D_2$, $D_3$, $D_4$) dans le sens des lignes avec m >> n et n > 1,

b) de m x n structures de mémoire d'intégration ($C_{i1}$ ou $C_{i2}$ ou $C_{i3}$ ou $C_{i4}$) reliées aux éléments détecteurs ($D_1$, $D_2$, $D_3$, $D_4$) en vue de la mémorisation de signaux de charge délivrés par les éléments détecteurs ($D_1$, ou $D_2$, ou $D_3$ ou $D_4$),

c) de m structures CCD-TDI (TDI = retard et intégration) en vue du transfert de charge, présentant chacune n entrées de signal et une sortie de signal, étant réalisée sous la forme de cellules de mémoire doubles CCD disposées successivement en série (1.1, 1.2, 1.3, 2.1, 2.2, 2.3, 3.1, 3.2, 3.3, 4.1, 4.2), n cellules de mémoire doubles CCD (1.1, 2.1, 3.1, 4.1) étant reliées en série à chacune d'une des entrées de signal,

respectivement entre deux cellules de mémoire doubles CCD reliées aux entrées de signal (1.1, 2.1, 3.1, 4.1) de la série p-1, sont disposées d'autres cellules de mémoire doubles CCD non reliées aux entrées de signal (1.2, 1.3, ou 2.2, 2.3 ou 3.2, 3.3), p > 1,

la dernière cellule de mémoire double CCD (4.2) de la série formant la sortie de signal de la structure CCD-TDI, d) de m x n commutateurs de transfert de charge ($S_1$, $S_2$, $S_3$, $S_4$), par l'intermédiaire desquels respectivement une entrée de signal d'une structure CCD-TDI est reliée à une structure de mémoire d'intégration ($C_{i1}$ ou $C_{i2}$ ou $C_{i3}$ ou $C_{i4}$), de telle sorte que les éléments détecteurs ($D_1$, $D_2$, $D_3$, $D_4$) d'une ligne de la série sont associés respectivement aux entrées de signal d'une structure CCD-TDI, et

e) au moins d'une structure de multiplexeur CCD (CCD-Mux) en vue de la lecture de signal avec en bloc m entrées de multiplexeur CCD (1, 2, $m_1$, m) associées respectivement à une structure CCD-TDI, caractérisé en ce que

f) l'agencement de détecteurs CCD-IR présente m structures d'adaptation de signal (SA) en vue de l'adaptation au niveau de signal apparaissant aux sorties de signal des structure CCD-TDI aux entrées de multiplexeur CCD (1, 2, $m_1$, m), les sorties de signaux des structures CCD-TDI étant reliées respectivement par l'intermédiaire d'une structure d'adaptation de signal (SA) à l'une des entrées de multiplexeur CCD (1 ou 2 ou $m_1$ ou m),

g) l'agencement de détecteurs CCD-IR pouvant être actionné selon un mode de fonctionnement dans lequel

la fréquence d'horloge de transfert de charge ($f_{\ddot{u}2}$) à laquelle les signaux de charge provenant des structures de mémoire d'intégration ($C_{i1}$, $C_{i2}$, $C_{i3}$, $C_{i4}$) sont transférés aux structures CCD-TDI, est égale à l'inverse de l'intervalle de temps $t_{DD}$ dans lequel, durant le processus d'analyse, un point d'image (B1, B2, B3, B4) est déplacé depuis le milieu d'un élément détecteur ($D_1$, $D_2$, $D_3$) vers le milieu de l'élément détecteur adjacent ($D_2$ ou $D_3$ ou $D_4$),

la fréquence d'horloge de transfert de charge ($f_{TDI2}$), à laquelle les signaux d'horloge à l'intérieur des structures CCD-TDI sont transférés d'une cellule de mémoire double CCD à la cellule de mémoire double CCD adjacente, est

p fois supérieure à la fréquence de transfert de charge ($f_{\ddot{u}2}$), et

la lecture de signaux des structures TDI s'effectue à la fréquence de transmission de charge ($f_{\ddot{u}2}$).

2. Agencement de détecteurs CCD-IR selon la revendication 1, caractérisé en ce que les dernières cellules de mémoire doubles CCD (4.2) des structures CCD-TDI sont prévues en vue de la mémorisation intermédiaire des signaux de charge élaborés par les structures CCD-TDI.

3. Agencement de détecteurs CCD-IR selon la revendication 1 ou 2, caractérisé en ce que les sorties de signaux des structures CCD-TDI sont reliées par l'intermédiaire d'une porte (LG) commandée au rythme de la fréquence d'horloge de transfert de charge ($f_{\ddot{u}2}$) aux structures d'adaptation de signaux correspondantes (SA).

4. Agencement de détecteurs CCD-IR selon l'une des revendications 1 à 3, caractérisé en ce que les structures d'adaptation de signaux (SA) sont prévues en vue de la mémorisation intermédiaire des signaux de charge élaborés par les dernières cellules de mémoire doubles CCD (4.2) des structures CCD-TDI.

EP 0 428 864 B1

BILDVORLAGE KONTINUIERLICHEN INHALTS

$B_4$  $B_3$  $B_2$  $B_1$

→ x

**Fig. 1b**

POS.1.1  1.2  1.3  2.1  2.2  2.3  3.1  3.2  3.3  4.1  4.2

$x_{s1}$  $x_{s1}$  $x_{s1}$

$x_{DD}$  $x_{DD}$  $x_{DD}$

$D_1$  $x_D$

$D_2$  $D_3$  $D_4$

$C_{i1}$  $C_{i2}$  $C_{i3}$  $C_{i4}$

$S_1$  $S_2$  $S_3$  $S_4$

$Z_1$  LG

TDICCD-STRUKTUR

AKKUM. LADUNGEN FÜR PIXEL $B_1$

SA

$Z_2$

Q / U

CCD-ESp

1.1.1  1.1.2  1.2.1  1.2.2  1.3.1  ............

CCD-DSp

1.1  1.2  1.3  2.1  2.2  2.3  3.1  3.2  3.3  4.1  4.2

1  2

CCD-MUX

$m_1$

**Fig. 1a**

PUNKTZIEL

$P(t_0)$  $P(t_1)$  $P(t_2)$  $P(t_3)$  $P(t_4)$

$x_{DD} = x_{s2}$

m

**Fig. 2**

8

BEZUG ZU DEN POS. DER FIG. 1

POS. 1.1  1.2  1.3  2.1  2.2  2.3  3.1  3.2  3.3  4.1  4.2

LADUNGSÜBERGABE-ZEITPUNKTE $\ddot{u}_1(t)$

$t_{1.1}$  $t_{1.2}$  $t_{1.3}$  $t_{2.1}$  $t_{2.2}$  $t_{2.3}$  $t_{3.1}$  $t_{3.2}$  $t_{3.3}$  $t_{4.1}$  $t_{4.2}$  $t_{LG}$  (LETZTES GATE)

Fig. 3a

$t_{s1}$

LADUNGS-VERSCHIEBETAKT $v_1(t)$

Fig. 3b

$t_{TDI_1} = t_{s1}$

LADUNGSÜBERGABE-ZEITPUNKTE $\ddot{u}_2(t)$

$t_1$  $t_2$  $t_3$  $t_4$  $t_5$  (LG)

Fig. 4a

$t_{s2} = t_{DD}$

LADUNGS-VERSCHIEBETAKT $v_2(t) \stackrel{\wedge}{=} v_1(t)$

Fig. 4b

$t_{TDI_2} = t_{TDI_1}$